# EUROPEAN PATENT APPLICATION

(11) **EP 4 044 482 A1**
(43) Date of publication of application: **17.08.2022**
(21) Application number: 19951268.2
(22) Date of filing: 07.11.2019
(51) Int. Cl.: H04L 5/00

(54) **COMMUNICATION METHOD AND COMMUNICATION APPARATUS**

(71) Applicant: Huawei Technologies Co., Ltd., Longgang Shenzhen, Guangdong 518129 (CN)
(72) Inventor: XIAO, Jiehua, Shenzhen, Guangdong 518129 (CN); LI, Xinxian, Shenzhen, Guangdong 518129 (CN); TANG, Hao, Shenzhen, Guangdong 518129 (CN); WANG, Yi, Shenzhen, Guangdong 518129 (CN)
(74) Representative: MERH-IP Matias Erny Reichl Hoffmann Patentanwälte PartG mbB
(86) International application number: PCT/CN2019/116298
(87) International publication number: WO 2021/087873

(57) **Abstract**

This application provides a communications method and a communications apparatus, to help a network device implement efficient cell management. The communications method includes: A terminal device receives first indication information from the network device, where the first indication information indicates the terminal device to enter a first state in a first cell, the first state includes a synchronous measurable state, and the first indication information is sent by the network device by using a second cell; and terminal device enters the first state in the first cell based on the first indication information.

## Description

### TECHNICAL FIELD

This application relates to the communications field, and more specifically, to a communications method and a communications apparatus.

### BACKGROUND

In a wireless system, a terminal communicates with a network by using information carried on a carrier. The terminal may communicate with the network on a single carrier or a plurality of carriers. Carrier aggregation (carrier aggregation, CA) or dual connectivity (dual connectivity, DC) means aggregating a plurality of component carriers (component carriers, CCs) to serve one terminal, so as to support a larger transmission bandwidth. A primary cell (primary cell, PCell) is determined during connection establishment (connection establishment) between the terminal and the network side. The PCell is responsible for radio resource control (radio resource control, RRC) communication with the terminal. A secondary cell (second cell, SCell) is used to provide additional radio resources. There may be a plurality of SCells.

For the terminal, SCells, different from the PCell, can be used for data communication only after being activated. When the SCells are not required for data communication, the network side may deactivate the SCells according to a deactivation command. How the network side efficiently manages and measures the SCells is an urgent problem to be resolved.

### SUMMARY

This application provides a communications method and a communications apparatus, to help a network device implement efficient cell management.

According to a first aspect, a communications method is provided. For example, the communications method may be performed by a terminal device, or may be performed by a component (for example, a circuit or a chip) in a terminal device. This is not limited in this application.

The communications method includes: receiving first indication information from a network device, where the first indication information indicates the terminal device to enter a first state in a first cell, the first state includes a synchronous measurable state, and the first indication information is sent by the network device by using a second cell; and entering the first state in the first cell based on the first indication information. In this embodiment of this application, the first indication information is sent to the terminal device, to indicate the terminal device to enter the synchronous measurable state in the first cell, so that the network device can manage or control a cell status.

The first state may be understood as a "known (known) state". The known state can be understood as the synchronous measurable state. For details, refer to related descriptions in a protocol.

"The terminal device enters the first state in the first cell" may be understood as that the terminal device maintains synchronization with the first cell and/or a signal used for synchronization is detectable.

Optionally, the first indication information includes a first field and/or a second field. The first field identifies the first cell, and the second field indicates an action (or a step, or a process) performed by the terminal device to enter the first state. In this way, the terminal device may learn, based on the first field, a cell in which the terminal device enters the first state, and may learn, based on the second field, an action that needs to be performed to enter the first state.

Optionally, the first cell and the second cell are configured by the network device for the terminal device, the second cell is an active cell, and the first cell is a deactivated cell.

Optionally, the communications method further includes: receiving second indication information from the network device, where the second indication information indicates the terminal device to activate the first cell. After receiving the second indication information, the terminal device may perform an activation process in the first cell based on the second indication information.

In a possible implementation, the first indication information is received before the second indication information from the network device is received. After receiving the first indication information, the terminal device enters the synchronous measurable state in the first cell. In this way, before receiving an activation indication (the second indication information) from the network device, the terminal device has entered the synchronous measurable state in the first cell. In other words, before the network device sends the second indication information, the terminal device is already in the synchronous measurable state in the first cell. In this way, an activation latency of the first cell can be greatly shortened, and resource usage efficiency can be improved.

In a possible implementation, the first indication information is received after the second indication information from the network device is received, and the first cell is in an out-of-synchronization state after being activated. Herein, after receiving the second indication information, the terminal device completes an activation process of the first cell. However, the terminal device learns that the first cell is still in the out-of-synchronization state by detecting the first cell. The terminal device receives the first indication information, and enters the synchronous measurable state in the first cell based on the first indication information.

Optionally, the communications method further includes: sending third indication information to the network device, where the third indication information indicates quality or strength of a signal of the first cell.

Optionally, when the quality or strength of the signal of the first cell is less than a specific threshold, the terminal device may send the third indication information to the network device, so that the network device adjusts the signal. Optionally, "the quality or strength of the signal of the first cell is less than a specific threshold" may be understood as a representation manner of "the signal of the first cell is abnormal".

Optionally, the signal includes a synchronization signal block SSB or a channel state information-reference signal CSI-RS.

Optionally, the communications method further includes: sending fourth indication information to the network device, where the fourth indication information indicates that a status of the terminal device in the first cell is the first state. Herein, after being in the first state in the first cell, the terminal device notifies the network device of the status of the terminal device in the first cell.

Optionally, the first indication information may be sent by using DCI, a MAC CE, an RRC, or the like, or may be sent by using newly defined signaling or a newly defined message. A sending manner is relatively flexible.

Optionally, the third indication information or the fourth indication information may be sent by using UCI, a MAC CE, or the like, or may be sent by using newly defined signaling or a newly defined message. A sending manner is relatively flexible.

In a possible implementation, the first cell is a secondary cell, and the communications method further includes: performing downlink synchronization detection on the secondary cell; and sending fifth indication information to the network device based on a result of the downlink synchronization detection, where the fifth indication information indicates that the secondary cell is in a downlink out-of-synchronization state. In this way, when detecting that the secondary cell is out of synchronization, the terminal device reports an out-of-synchronization indication to the network device, so that the network device manages the secondary cell.

Optionally, the communications method further includes: receiving configuration information from the network device, where the configuration information is used to perform the downlink synchronization detection on the secondary cell. Herein, the terminal device performs the downlink synchronization detection on the secondary cell by receiving the configuration information from the network device.

Optionally, the configuration information includes one or more of the following: a threshold of out-of-synchronization indication times, an out-of-synchronization determination timer, and a threshold of synchronization indication times.

According to a second aspect, a communications method is provided. For example, the communications method may be performed by a network device, or may be performed by a component (for example, a circuit or a chip) in a network device. This is not limited in this application.

The communications method includes: determining first indication information, where the first indication information indicates a terminal device to enter a first state in a first cell, and the first state includes a synchronous measurable state; and sending the first indication information to the terminal device, where the first indication information is sent by using a second cell. In this embodiment of this application, the network device sends the first indication information to the terminal device, to indicate the terminal device to enter the synchronous measurable state in the first cell, so that the network device can manage or control a cell status.

The first state may be equivalently replaced with a "known (known) state". For details about the meaning of "known state", refer to related descriptions in a protocol.

"The terminal device enters the first state in the first cell" may be understood as that the terminal device maintains synchronization with the first cell and/or a signal used for synchronization is detectable.

Optionally, the first indication information includes a first field and/or a second field. The first field identifies the first cell, and the second field indicates an action (or a step, or a process) performed by the terminal device to enter the first state. In this way, the terminal device may learn, based on the first field, a cell in which the terminal device enters the first state, and may learn, based on the second field, an action that needs to be performed to enter the first state.

Optionally, the first cell and the second cell are configured by the network device for the terminal device, the second cell is an active cell, and the first cell is a deactivated cell.

Optionally, the communications method further includes: sending second indication information to the terminal device, where the second indication information indicates the terminal device to activate the first cell. In other words, the network device sends an activation indication to the terminal device, to activate the first cell.

In a possible implementation, the first indication information is sent before the second indication information is sent. Before the network device sends the second indication information, the first cell is already in the synchronous and measurable state. In this way, an activation latency of the first cell can be greatly shortened, and resource usage efficiency can be improved.

In a possible implementation, the first indication information is sent after the second indication information is sent, and the first cell is in an out-of-synchronization state after being activated.

Optionally, the communications method further includes: receiving third indication information from the terminal device, where the third indication information indicates signal quality or strength of a first signal of the first cell. The network device may adjust the signal of the first cell based on the third indication information, so that the first cell can quickly enter the first state.

Optionally, "the quality or strength of the signal of the first cell is less than a specific threshold" may be understood as a representation manner of "the signal of the first cell is abnormal".

Optionally, the signal includes a synchronization signal block SSB or a channel state information-reference signal CSI-RS.

Optionally, the communications method further includes: receiving fourth indication information from the terminal device, where the fourth indication information indicates that a status of the terminal device in the first cell is the first state. The network device may learn the status of the terminal device in the first cell through reporting of the terminal device.

Optionally, the first indication information may be sent by using DCI, a MAC CE, an RRC, or the like, or may be sent by using newly defined signaling or a newly defined message. A sending manner is relatively flexible.

Optionally, the third indication information or the fourth indication information may be sent by using UCI, a MAC CE, or the like, or may be sent by using newly defined signaling or a newly defined message. A sending manner is relatively flexible.

In a possible implementation, the first cell is a secondary cell, and the communications method further includes: receiving fifth indication information from the terminal device, where the fifth indication information indicates that the secondary cell is in a downlink out-of-synchronization state. Herein, after obtaining an out-of-synchronization indication, the network device may manage the secondary cell based on the out-of-synchronization indication.

Optionally, the communications method further includes: sending configuration information to the terminal device, where the configuration information is used by the terminal device to perform downlink synchronization detection on the secondary cell. In other words, the network device may configure information used by the terminal device to detect the secondary cell.

Optionally, the configuration information includes one or more of the following: a threshold of out-of-synchronization indication times, an out-of-synchronization determination timer, and a threshold of synchronization indication times.

According to a third aspect, a communications method is provided. For example, the communications method may be performed by a terminal device, or may be performed by a component (for example, a circuit or a chip) in a terminal device. This is not limited in this application.

The communications method includes: receiving configuration information from a network device, where the configuration information is used by the terminal device to perform downlink synchronization detection on a first cell, and the first cell is a secondary cell configured by the network device for the terminal device; performing downlink synchronization detection based on the configuration information; and sending indication information to the network device, where the indication information indicates that the first cell is in a downlink out-of-synchronization state. In this way, when detecting that the secondary cell is out of synchronization, the terminal device reports an out-of-synchronization indication to the network device, so that the network device manages the secondary cell.

Optionally, the configuration information includes one or more of the following: a threshold of out-of-synchronization indication times, an out-of-synchronization determination timer, and a threshold of synchronization indication times.

Optionally, the communications method further includes: receiving first indication information from a network device, where the first indication information indicates the terminal device to enter a first state in the first cell, and the first state includes a synchronous measurable state.

According to a fourth aspect, a communications method is provided. For example, the communications method may be performed by a network device, or may be performed by a component (for example, a circuit or a chip) in a network device. This is not limited in this application.

The communications method includes: sending configuration information to the terminal device, where the configuration information is used by the terminal device to perform downlink synchronization detection on a first cell, and the first cell is a secondary cell configured by a network device for the terminal device; and receiving indication information from the terminal device, where the indication information indicates that the secondary cell is in a downlink out-of-synchronization state. In this embodiment of this application, the network device can manage the secondary cell by configuring the terminal device to perform downlink synchronization detection on the secondary cell, and receive an out-of-synchronization indication reported by the terminal device.

Optionally, the configuration information includes one or more of the following: a threshold of out-of-synchronization indication times, an out-of-synchronization determination timer, and a threshold of synchronization indication times.

Optionally, the communications method further includes: determining, based on the indication information and a service requirement, whether to send first indication information to the terminal device, where the first indication information indicates the terminal device to enter a first state in the first cell, and the first state includes a synchronous measurable state.

According to a fifth aspect, a communications apparatus is provided, and includes modules or units configured to perform the method in any possible implementation of the first aspect or the third aspect.

According to a sixth aspect, a communications apparatus is provided, and includes a processor. The processor is coupled to a memory, and may be configured to execute instructions in the memory, to implement the method according to any one of the first aspect, the third aspect, or the possible implementations of the first aspect or the third aspect. Optionally, the communications apparatus further includes the memory. Optionally, the communications apparatus further includes a communications interface, and the processor is coupled to the communications interface.

In an implementation, the communications apparatus is a terminal device. When the communications apparatus is the terminal device, the communications interface may be a transceiver or an input/output interface.

In another implementation, the communications apparatus is a chip disposed in a terminal device. When the communications apparatus is the chip disposed in the terminal device, the communications interface may be an input/output interface.

Optionally, the transceiver may be a transceiver circuit. Optionally, the input/output interface may be an input/output circuit.

According to a seventh aspect, a communications apparatus is provided and includes modules or units configured to perform the method in any possible implementation of the second aspect or the fourth aspect.

According to an eighth aspect, a communications apparatus is provided, including a processor. The processor is coupled to a memory, and may be configured to execute instructions in the memory, to implement the method according to any one of the second aspect, the fourth aspect, or the possible implementations of the second aspect or the fourth aspect. Optionally, the communications apparatus further includes the memory. Optionally, the communications apparatus further includes a communications interface, and the processor is coupled to the communications interface.

In an implementation, the communications apparatus is a network device. When the communications apparatus is the network device, the communications interface may be a transceiver or an input/output interface.

In another implementation, the communications apparatus is a chip disposed in a network device. When the communications apparatus is the chip disposed in the network device, the communications interface may be an input/output interface.

Optionally, the transceiver may be a transceiver circuit. Optionally, the input/output interface may be an input/output circuit.

According to a ninth aspect, a processor is provided, and includes an input circuit, an output circuit, and a processing circuit. The processing circuit is configured to receive a signal via the input circuit, and transmit a signal via the output circuit, so that the processor is enabled to perform the method according to any possible implementation of the first aspect to the fourth aspect.

During specific implementation, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, which is used as the input circuit and the output circuit at different moments. Specific implementations of the processor and the circuits are not limited in embodiments of this application.

According to a tenth aspect, an apparatus is provided, and includes a processor and a memory. The processor is configured to read an instruction stored in the memory, receive a signal via a receiver, transmit a signal via a transmitter, and perform the method according to any possible implementation of the first aspect to the fourth aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in embodiments of this application.

It should be understood that a related data exchange process, for example, sending indication information, may be a process of outputting the indication information from the processor, and receiving capability information, may be a process of receiving the input capability information by the processor. Specifically, data output by the processor may be output to the transmitter, and input data received by the processor may be from the receiver. The transmitter and the receiver may be collectively referred to as a transceiver.

The apparatus according to the tenth aspect may be a chip. The processor may be implemented by using hardware or software. When the processor is implemented by using hardware, the processor may be a logic circuit, an integrated circuit, or the like. When the processor is implemented by using software, the processor may be a general-purpose processor, and is implemented by reading software code stored in a memory. The memory may be integrated into the processor, or may be located outside the processor, and exists independently.

According to an eleventh aspect, a computer program product is provided. The computer program product includes a computer program (which may also be referred to as code or instructions). When the computer program is run, a computer is enabled to perform the method according to any one of the possible implementations of the first aspect to the fourth aspect.

According to a twelfth aspect, a computer-readable medium is provided. The computer-readable medium stores a computer program (which may also be referred to as code or instructions). When the computer program is run on a computer, the computer is enabled to perform the method according to any one of the possible implementations of the first aspect to the fourth aspect.

According to a thirteenth aspect, a communications system is provided. The communications system includes the foregoing network device and terminal device.

### BRIEF DESCRIPTION OF DRAWINGS

FIG. 1 is a schematic diagram of a system architecture that is applied to an embodiment of this application;
FIG. 2 is a schematic interaction diagram of a communications method that is applied to an embodiment of this application;
FIG. 3 is a schematic diagram of an example of a MAC CE carrying first indication information according to an embodiment of this application;
FIG. 4 is a schematic diagram of another example of a MAC CE carrying first indication information according to an embodiment of this application;
FIG. 5 is a schematic diagram of an example of a MAC CE carrying third indication information according to an embodiment of this application;
FIG. 6 is a schematic diagram of an example of a MAC CE carrying fourth indication information according to an embodiment of this application;
FIG. 7 is a schematic interaction diagram of a communications that is applied to another embodiment of this application;
FIG. 8 is a schematic block diagram of a communications apparatus according to an embodiment of this application;
FIG. 9 is a schematic diagram of a structure of a terminal device according to an embodiment of this application; and
FIG. 10 is a schematic diagram of a structure of a network device according to an embodiment of this application.

### DESCRIPTION OF EMBODIMENTS

The following describes technical solutions in this application with reference to the accompanying drawings.

In embodiments of this application, "a plurality of' means two or more, and another quantifier is similar to this.

It should be understood that the term "and/or" in this specification describes only an association relationship for describing associated objects and represents that three relationships may exist. For example, A and/or B may represent the following three cases: only A exists, both A and B exist, and only B exists. In addition, the character "/" in this specification usually indicates an "or" relationship between the associated objects.

It may be further understood that features or content marked by dashed lines in the accompanying drawings in embodiments of this application may be understood as optional operations or optional structures of embodiments.

"Transmission" in embodiments of this application may be flexibly understood. That is, "transmission" may be understood as "sending" or "receiving". For example, a network device sends downlink control information or downlink data information, and a terminal device receives the downlink control information or downlink data information. Alternatively, the terminal device sends uplink control information or uplink data information, and the network device receives the uplink control information or the uplink data information.

The technical solutions in embodiments of this application may be applied to various communications systems, for example, a long term evolution (long term evolution, LTE) system, an LTE frequency division duplex (frequency division duplex, FDD) system, and an LTE time division duplex (time division duplex, TDD), a universal mobile telecommunication system (universal mobile telecommunication system, UMTS), a worldwide interoperability for microwave access (worldwide interoperability for microwave access, WiMAX) communications system, a 5th generation (5th generation, 5G) system, a new radio (new radio, NR) system, a device to device (device to device, D2D) system, and a vehicle to everything (vehicle to everything, V2X) system.

The terminal device in embodiments of this application may be user equipment (user equipment, UE), a subscriber station (subscriber station, SS), customer premise equipment (customer Premise Equipment, CPE), an access terminal, a subscriber unit, a subscriber station, a mobile station, a mobile station, a remote station, a remote terminal, a mobile device, a user terminal, a terminal, a wireless communications device, a user agent, or a user apparatus. The terminal device may alternatively be a cellular phone, a cordless telephone set, a Session Initiation Protocol (Session Initiation Protocol, SIP) phone, a wireless local loop (wireless local loop, WLL) station, a personal digital assistant (personal digital assistant, PDA), a handheld device having a wireless communications function, a computing device, another processing device connected to a wireless modem, a vehicle-mounted device, a wearable device, a terminal device in a future 5G network, a terminal device in a future evolved public land mobile network (public land mobile network, PLMN), or the like. This is not limited in the embodiments of this application. The terminal device may alternatively be a software and/or a hardware module deployed in an autonomous vehicle, an intelligent vehicle, a digital vehicle, or an internet-of-vehicles vehicle. The terminal device in embodiments of this application may alternatively be a D2D device, a V2X device, or a road side unit (road side unit, RSU).

The network device in embodiments of this application may be a device configured to communicate with the terminal device. The network device may be a base transceiver station (base transceiver station, BTS) in a global system for mobile communications (global system for mobile communications, GSM) or a code division multiple access (code division multiple access, CDMA) system, or may be a NodeB (NodeB, NB) in a wideband code division multiple access (wideband code division multiple access, WCDMA) system, or may be an evolved NodeB (evolved NodeB, eNB or eNodeB) in the LTE system, or may be a radio controller in a cloud radio access network (cloud radio access network, CRAN) scenario. Alternatively, the network device may be a relay node, an access point, a vehicle-mounted device, a wearable device, a network device in the future 5G network, a network device in the future evolved PLMN network, or the like. This is not limited in embodiments of this application. In a network structure, a network device may include a centralized unit (centralized unit, CU) node, or a distributed unit (distributed unit, DU) node, or a radio access network device including a CU node and a DU node. In some deployments, the network device may further include a radio unit (radio unit, RU). The CU implements some functions of the network device, and the DU implements some functions of the network device. For example, the CU implements functions of a radio resource control (radio resource control, RRC) layer and a packet data convergence protocol (packet data convergence protocol, PDCP) layer, and the DU implements functions of a radio link control (radio link control, RLC) layer, a media access control (media access control, MAC) layer, and a physical (physical, PHY) layer. Information at the RRC layer eventually becomes information at the PHY layer, or is converted from information at the PHY layer. Therefore, in this architecture, higher layer signaling, for example, RRC layer signaling or PDCP layer signaling, may also be considered as being sent by the DU or sent by the DU and the RU. In addition, the CU may be classified into a network device in a radio access network, or may be classified into a network device in a core network (core network, CN). This is not limited herein.

In embodiments of this application, the terminal device or the network device may include a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). An operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method is not specifically limited in embodiments of this application, provided that a program that records code of the method provided in embodiments of this application can be run to perform communication according to the method provided in embodiments of this application. For example, the execution body of the method provided in embodiments of this application may be the terminal device or the network device, or may be a functional module that can invoke the program and execute the program in the terminal device or the network device.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, a computer-readable medium may include but is not limited to: a magnetic storage component (for example, a hard disk, a floppy disk, or a magnetic tape), an optical disc (for example, a compact disc (compact disc, CD) and a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may indicate one or more devices and/or other machine-readable media that are configured to store information. The term "machine-readable media" may include but is not limited to a wireless channel and various other media that can store, include, and/or carry instructions and/or data.

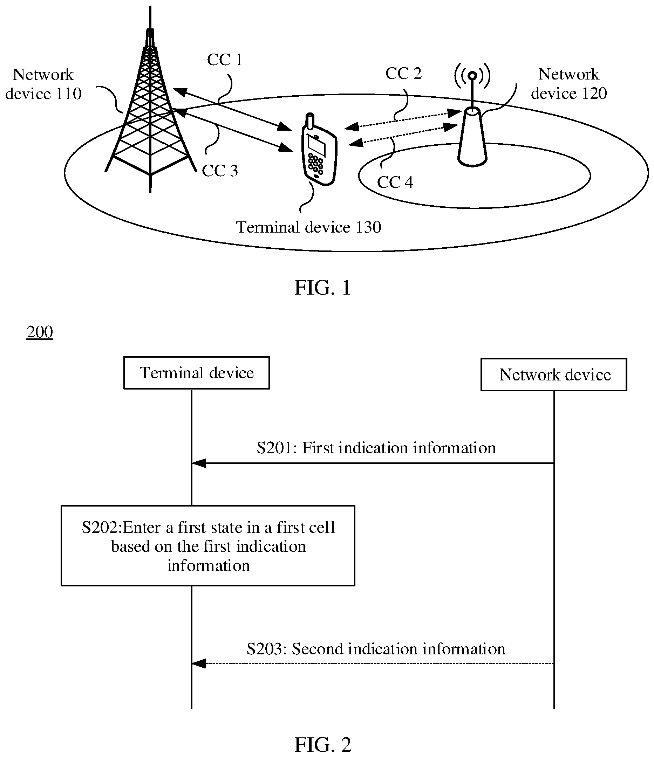

The network device may communicate with the terminal device through carrier aggregation (carrier aggregation, CA). Carrier aggregation CA means aggregating two or more component carriers (component carriers, CC) together to serve one terminal device, to support a larger transmission bandwidth. Generally, CA is aggregation of a plurality of CCs on one network device. FIG. 1 is a schematic diagram of a system architecture to which an embodiment of this application is applied. A network device 110 in FIG. 1 is used as an example. As shown in FIG. 1, the network device 110 communicates with a terminal device 130 by using a CC1 and a CC3. Solutions in embodiments of this application may be applied to a CA scenario.

Further, if two or more CCs used for aggregation are on different network devices, this case may be referred to as DC. The solutions in embodiments of this application may be applied to a DC scenario, or a scenario in which DC and CA are combined. The DC may be understood as that each of two network devices has at least one CC. For example, each of a primary network device (for example, a primary base station) and a secondary network device (for example, a secondary base station) has at least one CC, which is a primary cell (primary cell, PCell) and a primary secondary cell (primary second cell, PSCell).

The PCell is determined during connection establishment (connection establishment) between the terminal device and the network device. The PCell is responsible for RRC communication with the terminal device, and is referred to as a primary cell.

The PSCell is equivalent to a primary cell on the secondary network device, completes RRC communication between the terminal device and the secondary network device, is referred to as a primary secondary cell, and is a special SCell. The secondary network device may further have another secondary cell SCell. The terminal device may communicate with a network by using the primary network device and the secondary network device.

The SCell is added/modified/released by using an RRC connection reconfiguration (RCConnectionReconfiguration) message after an initial security activation procedure (initial security activation procedure), and is used to provide additional radio resources. No important RRC communication (for example, important RRC communication includes RRC connection establishment and release) is performed between the SCell and the terminal device, and SCell is referred to as a secondary cell.

Optionally, for a scenario in which DC and CA are combined, the architecture in FIG. 1 further includes a network device 120. The network device 120 communicates with the terminal device 130 by using a CC2 and a CC4. The CC1, the CC2, the CC3, and the CC4 are aggregated to provide a service for the terminal device 130. For example, the network device 110 is a primary base station, the network device 120 is a secondary base station, and each of the secondary base station and the secondary base station has at least one carrier, which is a PCell and a PSCell.

In both CA and DC, the terminal device communicates with the network device by using a plurality of carriers (a plurality of cells).

It should be noted that each downlink CC corresponds to an independent cell. It may also be said that one cell includes only one downlink CC. Generally, a downlink component carrier may be equivalent to one cell. One cell may include only one downlink carrier, or may include one downlink carrier and one uplink carrier, or may include one downlink carrier and two uplink carriers. Concepts of CC (which refers to downlink CC unless otherwise specified) and a cell in embodiments of this application may be interchanged.

It may be understood that the architecture in FIG. 1 is merely an example, and constitutes no limitation on this embodiment of this application. In this embodiment of this application, another proper communications architecture may be used. The following briefly describes terms used in embodiments of this application.

A serving cell (serving cell) is a cell that provides a service for a terminal device. For example, the terminal device performs uplink transmission or downlink transmission in the serving cell. If the terminal device is in an RRC-connected (RRC_CONNECTED) state, but no CA is configured, the terminal device has only one serving cell, namely, a PCell. If the terminal device is in an RRC-connected state and CA is configured, a serving cell set of the terminal device includes a PCell and all SCells. That is, the serving cell may be either a PCell or an SCell. The PCell or the SCell may also be a serving cell.

An SCell activation latency includes the following parts: T_{HARQ}, T_{activation_time}, and T_{CSI_Reporting}. T_{HARQ} is a latency caused because the terminal device generates, after receiving an SCell activation command, hybrid automatic repeat request (hybrid automatic repeat reQuest, HARQ) information for physical downlink shared channel (physical downlink shared channel, PDSCH) data that includes the SCell activation command. T_{activation_time} is a latency caused because the terminal device performs SCell activation, for example, completing cell synchronization and/or automatic gain control (automatic gain control, AGC) setting. T_{CSI_Reporting} is a latency caused because the terminal device measures and feeds back channel state information (channel state information, CSI), that is, processing time of a CSI report. In the SCell activation latency, the T_{activation_time} latency is usually the longest, especially in a scenario in which the SCell is in an unknown (unknown) state. An SCell whose measurement cycle (measurement cycle) is relatively long (for example, greater than 160 ms) and which is in the unknown state has a longer activation latency. If the SCell activation latency is too long, air interface resource usage of the SCell decreases.

To enable the network device to better manage the SCell, this application provides a communications method. A cell status can be managed and controlled by sending, to the terminal device, first indication information that indicates the terminal device to enter a first state. Further, in this embodiment of this application, before sending an activation command to the terminal device, the network device sends the first indication information to the terminal device, so that the terminal device enters a synchronous measurable state before activating the SCell. This helps reduce the SCell activation latency.

The following describes a communications method in embodiments of this application with reference to FIG. 2 to FIG. 7.

FIG. 2 is a schematic interaction diagram of a communications method 200 to which an embodiment of this application is applied. It may be understood that a terminal device in FIG. 2 may be the terminal device (for example, the terminal device 130) in FIG. 1, or may be an apparatus (for example, a processor, a chip, or a chip system) in the terminal device. A network device may be the network device (for example, the network device 110 or the network device 120) in FIG. 1, or may be an apparatus (for example, a processor, a chip, or a chip system) in the network device. It may be further understood that some or all of information exchanged between the terminal device and the network device in FIG. 2 may be carried in an existing message, channel, signal, or signaling, or may be carried in a newly defined message, channel, signal, or signaling. This is not specifically limited. As shown in FIG. 2, the method 200 includes the following steps.

S201: The network device sends first indication information to the terminal device, where the first indication information indicates the terminal device to enter a first state in a first cell, the first state includes a synchronous measurable state, and the first indication information is sent by the network device by using a second cell.

Correspondingly, the terminal device receives the first indication information from the network device.

The first state may be understood as a "known (known) state". The "known state" may be understood as the synchronous measurable state. For a specific meaning of the known state, refer to descriptions in section 8.3.2 in version 16.1.0 of the 3^{rd} generation partnership project (the 3^{rd} generation partnership project, 3GPP) technical standard (technical standard, TS) 38.133. The following uses an SCell as an example to describe the known state.

For example, the SCell is known, that is, the SCell is in the known state if the SCell meets at least one of the following conditions:
(1) before an SCell activation command is received, within a time period equal to max (5 × measCycleSCell, 5 × DRX cycle):
   the terminal device has sent a valid measurement report for the SCell that is being activated, and determines, based on a cell identification condition specified in NR intra-frequency (intra-frequency) measurement and NR inter-frequency (inter-frequency) measurement, that a measured SSB is still detectable; (2) based on a cell identification condition specified in a protocol, a synchronization signal block (SSB) measured in duration equal to max (5 × measCycleSCell, 5 × DRX cycle) also remain detectable in an SCell activation latency.
   measCycleSCell is measurement cycle time configured for a secondary cell, and DRX cycle is discontinuous reception cycle time.

The meaning of "detectable" is briefly introduced here. A cell being detectable means that an intra-frequency cell is detectable when the following conditions are met: Each related SSB can provide information about a synchronization signal-reference signal received power (synchronization signal-reference signal receiving power, SS-RSRP), synchronization signal-reference signal received quality (synchronization signal-reference signal receiving quality, SS-RSRQ), a synchronization signal-signal to interference plus noise ratio (synchronization signal-signal to interference plus noise ratio, SS-SINR) of a related frequency band, or information related to the synchronization signal block received power (synchronization signal block receiving power, SSB_RP) and SSB Ês/Iot meets a certain condition (for example, the information meets a certain threshold requirement, and in-band measurement meets a certain threshold requirement, where the threshold requirement may be related to the frequency band and SCS of the SSB, for details, refer to 3GPP TS 38.133 version 16.1.0 Annex B.2.2 Table B.2.2-1). The SSB Ês/Iot may be understood as a ratio of the SSB received power to a power spectral density.

"The terminal device enters a first state in a first cell" may be understood as: The terminal device maintains synchronization with the first cell, and/or a signal used for synchronization may be detected by the terminal device. Optionally, the signal used for synchronization may include an SSB or a channel state information-reference signal (channel state information-reference signal, CSI-RS). A state of the terminal device before the terminal device enters the first state is not specifically limited in this embodiment of this application. Before entering the first state, the terminal device may be in the first state, or may be in a second state. The second state may be understood as a state different from or opposite to the first state. For example, the second state is a non-synchronization state.

For example, the first cell may be an SCell, or a primary secondary cell PSCell.

S202: The terminal device enters the first state in the first cell based on the first indication information.

In this embodiment of this application, the network device sends the first indication information to the terminal device by using the second cell, where the first indication information indicates the terminal device to enter the synchronous measurable state in the first cell. After receiving the first indication information, the terminal device enters the synchronous measurable state in the first cell based on the first indication information. For example, the terminal device may switch from the non-synchronization state to the synchronous measurable state. In this way, a cell status can be managed and controlled by introducing the first indication information.

Optionally, the second cell is an activated cell, and the first cell is a deactivated cell and has a relatively large measurement cycle. The network device sends the first indication information to the terminal device by using the activated cell, so that the terminal device enters the synchronous measurable state in the first cell. For example, the second cell is a primary cell, or an activated secondary cell, or an activated primary secondary cell, and the first cell is a deactivated secondary cell.

Optionally, the network device may send the first indication information to the terminal device through a physical downlink control channel (physical downlink control channel, PDCCH).

Optionally, the network device may send the first indication information to the terminal device by using an existing downlink control information (downlink control information, DCI) format or a newly defined DCI format. For example, in an NR system, the DCI format may include a DCI format 1_0 (DCI format 1_0), a DCI format 1_1 (DCI format 1_1), a DCI format 0_0, or a DCI format 0_1. In an LTE system, the DCI format may include a DCI format 1 series (DCI format 1 series) or a DCI format 2 series (DCI format 2 series). The DCI format 1 series may be represented as a DCI format 1/1A/1B/1C/1D, a DCI format 6-1A/6-1B, or DCI format 7-1A/7-1B/7-1C/7-1D/7-1E/7-1F/7-1G. The DCI format 2 series may be represented as a DCI format 2/2A/2B/2C/2D or a DCI format 6-2.

The network device may scramble a cyclic redundancy check (cyclic redundancy check, CRC) in a DCI format by using an existing radio network temporary identifier (radio network temporary identifier, RNTI) or a newly defined RNTI, for example, an X-RNTI.

For example, the existing RNTI includes a cell-radio network temporary identifier (cell-radio network temporary identifier, C-RNTI), a paging-radio network temporary identifier (paging-radio network temporary identifier, P-RNTI), or a system information-radio network temporary identifier (system information radio network temporary identifier, SI-RNTI).

Optionally, the first indication information includes a first field and/or a second field. The first field identifies the first cell, and the second field indicates an action (or a step, or a process) performed by the terminal device to enter the first state.

The first field may be implemented by using a cell indication, and the cell indication identifies the first cell. For example, the first indication information includes a cell indication information field, and the first field may be an information bit in the cell indication information field. It is assumed that a maximum of 16 cells are supported, and one cell thereof is a PCell. An example in which the cell indication information field includes a bitmap (bitmap) of 15 bits is used. The 15 bits respectively corresponds to 15 SCells, which are respectively SCell 1 to SCell 15. The 15 bits may separately indicate the 15 SCells. When configuring an SCell for the terminal device, the network device configures one secondary cell index (SCell index) for each SCell. For example, the network device configures 15 SCells for the terminal device, and indexes of the SCells are 1 to 15 sequentially. That is, an SCell index of SCell 1 is 1, an SCell index of SCell 2 is 2, and so on. Cell indication information of the 15 bits sequentially corresponds to the 15 SCells based on bit locations. A value of each bit indicates an operation performed on a corresponding cell. For example, if the information bit is "1", it indicates that the operation performed on the corresponding cell is started, and if the information bit is "0", it indicates that the operation performed on the corresponding cell is not started. For example, if the first cell is one of the 15 SCells, and a value of a bit corresponding to the first cell is 1, it indicates that an operation performed on the first cell is started. It may be understood that the 15 bits are used as an example for description in the foregoing indication, and this does not constitute a limitation on this embodiment of this application. Certainly, to reduce overheads of control information, bits occupied by the cell indication information field may be reduced. For example, four bits may alternatively be used to indicate the operation performed on the corresponding cell, and the four bits may respectively indicate four cells.

If only one cell needs to be indicated, the network device may correspond single-cell indication information to an SCell index of an SCell. For example, 4-bit cell indication information is used, and a value indicated by the 4-bit cell indication information is the SCell index. For example, when the value of the 4-bit cell indication information is 2, it indicates an SCell whose SCell index is 2. Optionally, the single-cell indication information may further reuse a carrier indicator field (carrier indicator field, CIF) information field in existing DCI, send the first indication information to the terminal device, and indicate the cell to the terminal device by using the DCI. A CIF is a cell identifier configured by the network device for an SCell in cross-carrier scheduling.

Here is a brief introduction to the CIF. CIF-based cross-carrier scheduling allows a PDCCH of one serving cell to schedule radio resources of another serving cell. A cell used to send a PDCCH is referred to as a scheduling cell, and a cell whose resources are scheduled is referred to as a scheduled cell. That is, control information is transmitted on one CC, and corresponding data is transmitted on another CC. It should be noted that a PCell is not scheduled by another carrier, and an SCell may be configured to schedule another SCell carrier, or may be configured to be scheduled by a carrier of another SCell. In addition, one cell may schedule a plurality of other cells. In addition to a serving cell, an existing protocol supports scheduling a plurality of other cells. A cell can schedule a plurality of cells at the same time. The network device allocates a CIF to a scheduled cell, and the CIF indicates, when the scheduled cell sends a PDCCH, a cell for which PDCCH information is served. Therefore, the CIF may also be considered as an identifier of the scheduled cell. CIFs with different bits can be defined based on a quantity of scheduled cells supported by a cell. For example, the existing CIF has 3 bits, and supports scheduling of seven cells. When a greater quantity of scheduled cells needs to be supported, the CIF may expand a quantity of bits. This is not limited in this embodiment of this application.

For example, the second field may be implemented by using a procedure indication (procedure indication) field. A procedure indication indicates an action performed by the terminal device after entering the first state. Optionally, the action performed by the terminal device when entering the first state includes one or more of the following: cell search (coarse synchronization), downlink synchronization (fine time and frequency synchronization), AGC adjustment, CSI measurement, and beam sweeping.

For example, the first indication information includes the first field and the second field. That is, the first indication information not only includes a field identifies a cell, but also includes a field of the action that needs to be performed for entering the first state. In this way, the terminal device may learn, based on the first indication information, a cell in which the terminal device enters the first state and an action that needs to be performed to enter the first state.

For example, the first indication information includes the first field. In this case, the action that needs to be performed by the terminal device to enter the first state may be default. For example, the network device and the terminal device pre-agree on, in a protocol, the action that needs to be performed by the terminal device to enter the first state. After receiving the first indication information, the terminal device obtains the first cell identified by the first field in the first indication information, and performs, in the first cell, the default action that needs to be performed for entering the first state. For example, the default action includes downlink synchronization, AGC adjustment, and CSI measurement.

For example, the first indication information includes the second field. In this case, the first cell may be a default cell. For example, the network device and the terminal device pre-agree on the first cell in a protocol. The terminal device performs, in the default cell based on the second field, the action that needs to be performed for entering the first state. The default cell may be a cell corresponding to a minimum or a maximum SCell index value configured by the network device for the terminal device.

It may be understood that, in addition to including the first field and/or the second field, the first indication information may further include another information field. For example, the first indication information may further include one or more of the following information fields: a semi-persistent channel state information-reference signal (semi-persistent channel state information-reference signal, SP-CSI-RS) resource set identifier (resource set ID), a BWP indication (indication), a CSI trigger (trigger) indication, and a reserved field (or reserved bits Reserved bits).

The SP-CSI-RS resource set ID indicates an index NZP-CSI-RS-ResourceSet of a semi-persistent non-zero power channel state information-reference signal resource (non-zero power channel state information-reference signal resource, NZP CSI-RS resource) set. The index indicates a CSI-RS resource used by the terminal device to perform synchronization, AGC adjustment, or CSI measurement.

The BWP indication indicates a BWP index in one cell. If BWP indexes of a plurality of cells need to be indicated, M × N bits are required. M indicates a quantity of cells, and N indicates a quantity of bits of the BWP index. For example, when 15 SCells are supported and one cell supports four BWPs, M = 15, and N = 2. The BWP indication indicates a BWP of a cell on which an indication operation is performed.

The CSI trigger indicates triggering of an aperiodic CSI-RS. For example, six bits are used to indicate triggering of one CSI-RS in 64 valid trigger states (TriggerStates).

The reserved field means bits padded when a DCI size is aligned with a size of an existing DCI format. A purpose of introducing the reserved field is: A quantity of blind detection times of a PDCCH of the terminal device is not increased, so that a size of a newly designed DCI format or a reused DCI format is aligned with the size of the existing DCI format. For example, when the network device sends the first indication information by using a DCI format 1_1, a size of the DCI format 1_1 needs to be consistent with a size of a DCI format 1_1 used for downlink data scheduling. It may be understood that the DCI format 1_1 is merely used as an example for description herein, and this does not constitute a limitation on this embodiment of this application. Actually, if the network device sends the first indication information by using another DCI format, a principle of aligning DCI sizes also needs to be met.

Optionally, the first indication information may further include acknowledgment information. The acknowledgment information is a basis for determining the first indication information by the terminal device. Specifically, when the network device reuses the first indication information by using the existing DCI format, the terminal device needs to confirm that the DCI is the first indication information based on the acknowledgment information, that is, confirm that the DCI indicates the terminal device to enter the first state in the first cell.

Optionally, the acknowledgment information may be determined by scrambling the CRC in the DCI format by using the newly defined RNTI, or may be determined based on a specific value of a specific DCI information field, or may be determined by using a combination of the two. This is not specifically limited. For example, the acknowledgment information may be determined by using one or more of the following information fields: a time domain resource assignment (time domain resource assignment, TDRA), a frequency domain resource assignment (frequency domain resource assignment, FDRA), a HARQ process number (process number), a redundancy version (redundancy version, RV), a modulation and coding scheme (modulation and coding scheme, MCS), a new data indicator (new data indicator, NDI), transmit power control (transmit power control, TPC) (which may be TPC of a physical uplink shared channel (physical uplink shared channel, PUSCH) or TPC of a physical uplink control channel (physical uplink control channel, PUCCH)), and a frequency hopping flag (frequency hopping flag).

For example, the following Table 1 is an implementation of the first indication information. In Table 1, an example in which the acknowledgment information of the first indication information is determined by using a TDRA is used for description.

**Table 1**

| Information field | Quantity of bits | Meaning |
|---|---|---|
| Identifier for DCI formats | 1 | Downlink data scheduling indication |
| TDRA | Variable Variable | Time domain resource indication |
| Cell indication | 15 or 4 | Cell indication |
| BWP indication | 0 or 2 | BWP index indication |
| Procedure indication | 3 | 000: all possible processes in which an SCell is known, which are implemented and determined by UE |
| | | 001: cell search (coarse synchronization) |
| | | 010: downlink synchronization (fine time and frequency synchronization) |
| | | 011: AGC adjustment |
| | | 100: CSI measurement |
| | | 101: beam sweeping |
| CSI trigger | 6 | Asynchronous CSI-RS trigger |
| SP-CSI-RS resource set ID | 6 | Semi-persistent CSI-RS resource set activation |
| Reserved bits | Variable | Reserved bits or padding bits |

In Table 1, the first indication information includes the following fields: an identifier for DCI formats, a TDRA, a cell indication (corresponding to the foregoing first field), a BWP indication, a procedure indication (corresponding to the foregoing second field), a CSI trigger, an SP-CSI-RS resource set ID, and reserved bits. It may be understood that an example in which a quantity of bits of one cell is indicated is used for description of a quantity of bits of the BWP indication, the procedure indication, the CSI trigger, and the SP-CSI-RS resource set ID shown in Table 1. When independent information of a plurality of cells needs to be indicated, a quantity of bits of the plurality of cells needs to be described proportionately. Certainly, when the indicated information of the plurality of cells is consistent, a uniform set of indication information may alternatively be used. This is not limited. The TDRA in Table 1 is used as the acknowledgment information of the first indication information. For example, when detecting that every bit of information about a TDRA field in PDCCH information in the DCI format 1_0 scrambled by using a C-RNTI is '1', the terminal device determines that the PDCCH information is the first indication information.

It may be understood that a quantity of bits corresponding to each field in Table 1 is merely an example for description, and this does not constitute a limitation on this embodiment of this application. Actually, each field in Table 1 may have another value.

Optionally, the network device may send the first indication information to the terminal device by using a medium access control control element (medium access control control element, MAC CE). The first indication information may be sent by using a fixed-length MAC CE. That is, the MAC CE carrying the first indication information may include the first field and/or the second field. For meanings of the first field and the second field, refer to the foregoing descriptions. Optionally, the MAC CE carrying the first indication information may further include an indication, for example, a reserved field and a CSI trigger.

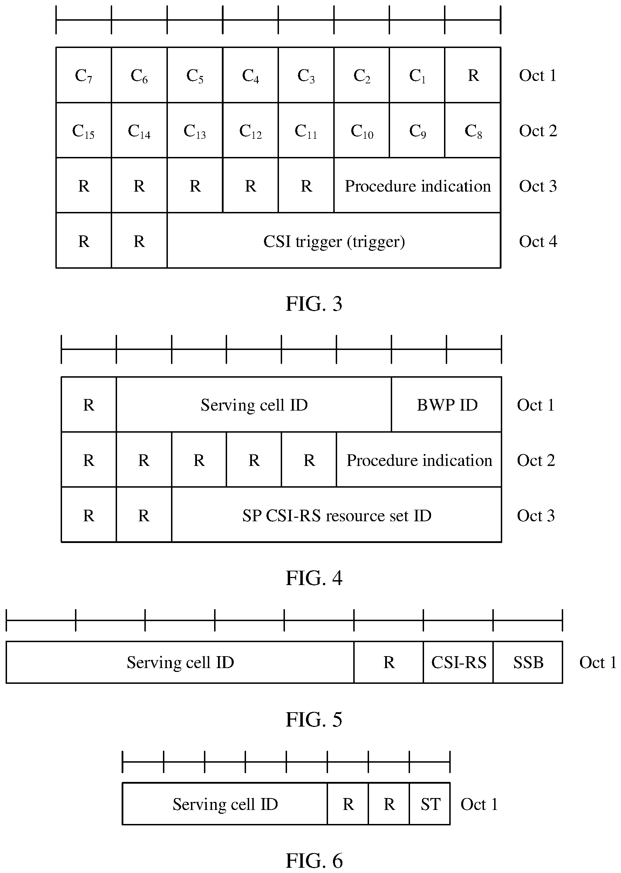

Each of FIG. 3 and FIG. 4 shows an example of the MAC CE carrying the first indication information.

As shown in FIG. 3, the MAC CE carrying the first indication information includes the following fields: a field Ci (a value of i ranges from 1 to 15), reserved bits Rs, a CSI trigger, and a procedure indication. Meaning of Ci is as follows: If an SCell having an SCell index i is configured for RRC, the field Ci indicates indication information of the SCell having an SCell index i. If no SCell having an SCell index i is configured for RRC, a MAC entity of the terminal device ignores the field Ci. R is a reserved bit and is set to 0. For meanings of the procedure indication and the CSI trigger, refer to the foregoing descriptions. Details are not described herein again.

As shown in FIG. 4, the MAC CE carrying the first indication information includes the following fields: a serving cell (serving cell) ID, a BWP ID, reserved bits Rs, a procedure indication, and an SP-CSI-RS resource set ID. A value corresponding to the serving cell ID is an SCell index, indicating that an SCell with an SCell index is configured for RRC. The BWP ID indicates a downlink DL BWP in a corresponding SCell. For meanings of the procedure indication and the SP-CSI-RS resource set ID, refer to the foregoing descriptions. Details are not described herein again.

It should be understood that the examples in FIG. 3 and FIG. 4 are provided merely for helping a person skilled in the art understand embodiments of this application, instead of limiting embodiments of this application to specific scenarios shown in the examples. Clearly, a person skilled in the art can make various equivalent modifications or changes according to the examples shown in FIG. 3 and FIG. 4, and such modifications or changes also fall within the scope of embodiments of this application.

The terminal device may further receive an indication from the network device used to activate the first cell. Optionally, the method 200 further includes the following step:

S203. The network device sends second indication information to the terminal device, where the second indication information indicates the terminal device to activate the first cell. Correspondingly, the terminal device receives the second indication information from the network device. The terminal device may perform an activation process in the first cell based on the second indication information. The terminal device may send a valid CSI report to the network device, to complete activation of the first cell.

It may be understood that an execution sequence of steps S203 and S202 is not limited in the example in FIG. 2. A sequence of receiving the first indication information and the second indication information by the terminal device is not limited in embodiments of this application.

In a first possible implementation, the first indication information is received before the second indication information from the network device is received. In other words, the network device sends the first indication information before sending the second indication information.

The network device enables the terminal device to complete a synchronization process with the first cell in advance. Optionally, the network device may alternatively enable the terminal device to complete one or more of the following processes in the first cell in advance: AGC adjustment, beam sweeping, and CSI measurement.

Specifically, after receiving the first indication information, the terminal device enters the synchronous measurable state in the first cell. Before receiving an activation indication from the network device, the terminal device has entered the synchronous measurable state in the first cell. In other words, before the network device sends the second indication information, the terminal device is already in the synchronous measurable state in the first cell. In this way, an activation latency of the first cell can be greatly shortened (that is, a latency of the activation process of the first cell is shortened), and resource usage efficiency can be improved.

For example, the first cell is an SCell. When the SCell is in the deactivated state, the following behavior may be added to the terminal device: monitoring a PDCCH serving the SCell; and measuring CSI-RSs on the SCell, where the CSI-RSs include periodic, semi-persistent, and aperiodic CSI-RSs. Alternatively, a new SCell state may be introduced, for example, an enhanced deactivated (enhanced deactivated) state, and the terminal device may perform the following behavior: monitoring a PDCCH serving the SCell; and measuring CSI-RSs on the SCell, where the CSI-RSs include periodic, semi-persistent, and aperiodic CSI-RSs.

In a second possible implementation, the first indication information is received after the second indication information from the network device is received. In this case, the first indication information may be used by the network device to control a status, for example, a synchronization state between the terminal device and the network.

Specifically, after receiving the second indication information, the terminal device completes the activation process of the first cell. Then, the first cell enters the active state. In a period of time, the synchronization state between the network device and the terminal device changes as a communications service between the network device and the terminal device changes. The terminal device may learn, by detecting the first cell, that the first cell is in the out-of-synchronization state. The terminal device receives the first indication information, and then enters the synchronous measurable state in the first cell based on the first indication information.

In this embodiment of this application, the terminal device may detect a signal of the first cell, and report quality of the signal of the first cell to the network device. Optionally, the method 200 further includes: The terminal device sends third indication information to the network device, where the third indication information indicates the quality or strength of the signal of the first cell.

Herein, when detecting that the signal of the first cell is abnormal, the terminal device may report the third indication information to the network device. Whether the signal of the first cell is abnormal may be determined in the following manner: If it is detected that the quality, the strength, a signal-to-noise ratio, or a signal-to-interference ratio of the first cell is less than a corresponding threshold, it is considered that the signal of the first cell is abnormal. Optionally, if the terminal device detects that the signal of the first cell is normal, the terminal device may not report the third indication information to the network device.

Optionally, the terminal device may detect a signal of the first cell used for synchronization, AGC adjustment, and CSI measurement, for example, an SSB or a CSI-RS, to determine whether the first cell is abnormal.

Optionally, the third indication information may include a cell indication, which indicates a cell whose signal is abnormal. The third indication information may alternatively include a signal abnormal indication, which indicates a signal that is abnormal.

For the network device, after receiving the third indication information, the network device may adjust the signal of the first cell, so that the terminal device can quickly enter the first state in the first cell.

After the first cell enters the first state, the terminal device may also report the third indication information to the network device. Optionally, the method 200 further includes: The terminal device sends fourth indication information to the network device, where the fourth indication information indicates that a status of the terminal device in the first cell is the first state. Correspondingly, the network device receives the fourth indication information from the terminal device. The terminal device sends the fourth indication information to the network device, so that the network device learns that the terminal device is already in the first state in the first cell. In this way, the network device may schedule the terminal device in the first cell to perform transmission.

For example, the fourth indication information may include a cell indication (that indicates the first cell) and a field that indicates whether the cell enters the first state. For example, when a value of the field that indicates whether the cell enters the first state is 0, it indicates that the first cell is not in the synchronous measurable state, and when the value of the field is 1, it indicates that the first cell is in the synchronous measurable state.

The third indication information and/or the fourth indication information may be sent by sharing a same PUCCH resource or a same PUSCH resource as uplink control information (uplink control information, UCI). Existing UCI information includes a scheduling request (scheduling request, SR), a HARQ, and channel state information (channel state information, CSI). The third indication information and/or the fourth indication information in this embodiment of this application may be used as new UCI information, for example, a cell status (cell status, CST). When there is no PUSCH, the UCI is sent through the PUCCH. When there is a PUSCH, the terminal device may send the UCI information by using the PUSCH to piggyback (piggyback) the UCI information based on an indication of the network.

The third indication information and/or the fourth indication information and other uplink control information UCI may undergo joint channel coding, or may be separately coded and then jointly sent. This is not specifically limited.

Similar to the first indication information, the third indication information and the fourth indication information may also be separately sent by using a MAC CE. A difference between the first indication information and the third indication information or the fourth indication information is that the MAC CE carrying the first indication information is a downlink MAC CE, a value of a logical channel identifier (logical channel identifier, LCID) may be any one of 33 to 46, the MAC CE carrying the third indication information or the fourth indication information is an uplink MAC CE, and a value of an LCID may be any one of 33 to 51.

FIG. 5 is a schematic diagram of an example of the MAC CE carrying the third indication information. The MAC CE carrying the third indication information may be a MAC CE of a fixed length. As shown in FIG. 5, the MAC CE carrying the third indication information includes the following fields: a serving cell (serving cell) ID, a reserved bit R, a CSI-RS, and an SSB.

FIG. 6 is a schematic diagram of an example of the MAC CE carrying the fourth indication information. The MAC CE carrying the fourth indication information may be a MAC CE of a fixed length. As shown in FIG. 6, the MAC CE carrying the fourth indication information includes the following fields: a serving cell (serving cell) ID, reserved bits Rs, and an ST (status). The ST field indicates whether a cell is in the first state.

It should be understood that the examples in FIG. 5 and FIG. 6 are provided merely for helping a person skilled in the art understand embodiments of this application, instead of limiting embodiments of this application to specific scenarios shown in the examples. Clearly, a person skilled in the art can make various equivalent modifications or changes according to the examples shown in FIG. 5 and FIG. 6, and such modifications or changes also fall within the scope of embodiments of this application.

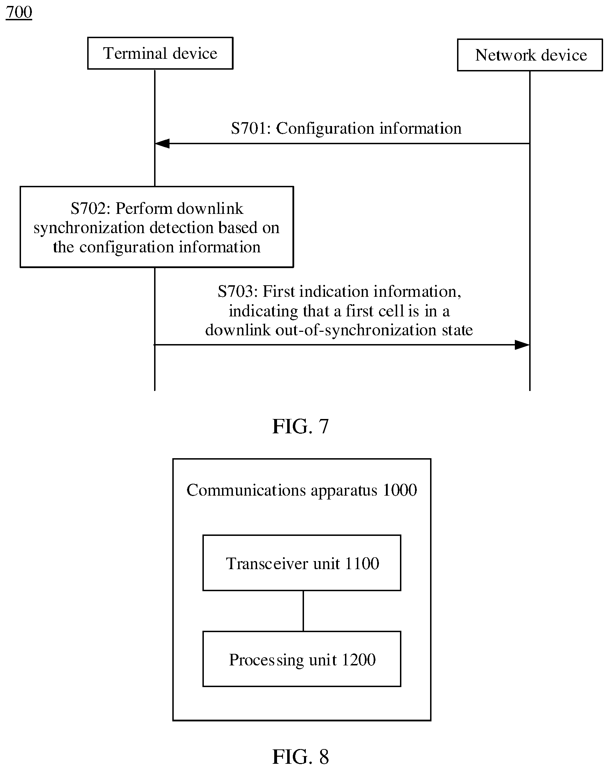

This application further provides a method for determining whether a secondary cell is out of downlink synchronization. The method may be used in combination with the foregoing embodiments, or may be independently implemented. This is not specifically limited. FIG. 7 is a schematic interaction diagram of a communications method 700 to which another embodiment of this application is applied. It may be understood that a terminal device in FIG. 7 may be the terminal device (for example, the terminal device 130) in FIG. 1, or may be an apparatus (for example, a processor, a chip, or a chip system) in the terminal device. A network device may be the network device (for example, the network device 110 or the network device 120) in FIG. 1, or may be an apparatus (for example, a processor, a chip, or a chip system) in the network device. It may be further understood that some or all of information exchanged between the terminal device and the network device in FIG. 7 may be carried in an existing message, channel, signal, or signaling, or may be carried in a newly defined message, channel, signal, or signaling. This is not specifically limited. As shown in FIG. 7, the method 700 includes the following steps.

S701: The network device sends configuration information to the terminal device, where the configuration information is used by the terminal device to perform downlink synchronization detection on a first cell, and the first cell is a secondary cell configured by the network device for the terminal device. Correspondingly, the terminal device receives the configuration information from the network device.

Optionally, the configuration information includes one or more of the following: a threshold of out-of-synchronization indication times, an out-of-synchronization determination timer, and a threshold of synchronization indication times. The network device may configure a same parameter value or different parameter values for different SCells. For example, a threshold of out-of-synchronization indication times configured by the network device for an SCell is N310-S, an out-of-synchronization determination timer is T310-S, and a threshold of synchronization recovery indication times is N311-S, where S represents corresponding to one SCell.

S702: The terminal device performs downlink synchronization detection based on the configuration information.

For example, the terminal device sends an out-of-synchronization signal (out of sync) and a synchronization signal (In Sync) to a higher layer by using a physical layer. The higher layer of the terminal device determines, with reference to the parameters N310-S, N311-S, and the timer T310-S that are configured by the network device, whether the SCell is in a downlink synchronization state. When the higher layer of the terminal device determines that the SCell is in a downlink non-synchronization state, the higher layer of the terminal device may report the SCell to the network device by using an activated cell.

Specifically, after receiving, in the synchronization state, an out-of-synchronization indication (out-of-sync indication) reported by the physical layer of the terminal device for N310-S continuous times, the higher layer of the terminal device starts the T310-S timer. Before the T310-S timer expires, if the synchronization indication (in-sync indication) is received for N311-S times, the terminal device considers that the synchronization state is restored; otherwise, after the T310-S timer expires, the terminal device is triggered to perform S703. Parameter configurations of the N310-S, N311-S, and T310-S are provided by the network device.

S703: The terminal device sends first indication information to the network device, where the first indication information indicates that the first cell is in a downlink out-of-synchronization state. Correspondingly, the network device receives the first indication information from the terminal device.

In this embodiment of this application, the terminal device performs out-of-synchronization detection on a secondary cell, and when detecting that the secondary cell is in the downlink out-of-synchronization state, the terminal device sends indication information to the network device, to provide information for the network device to manage the secondary cell.

Optionally, the method 700 further includes: The network device determines, based on the first indication information and a service requirement, whether to send second indication information to the terminal device, where the second indication information indicates the terminal device to enter a first state in the first cell, and the first state includes a synchronous measurable state. It may be understood that for a description of the second indication information in the method 700, refer to the description of the first indication information in the foregoing method 200. To avoid redundancy, details are not described herein again.

For example, the network device may determine, based on the service requirement, whether a plurality of carriers are required for sending, and determine whether to send the second indication information to the terminal device, to flexibly manage the secondary cell.

For example, if an amount of service data to be sent is relatively large or a service is urgent, and needs to be sent rapidly, the network device determines to perform sending on the plurality of carriers. The network device determines to activate the first cell, and sends the first indication information to the terminal device in advance, so that the first cell enters the synchronous measurable state.

Therefore, the network device can efficiently manage the secondary cell by learning out-of-synchronization information of the secondary cell that is reported by the terminal device.

It may be understood that, in some scenarios, some optional features in embodiments of this application may be independently implemented without depending on another feature, for example, a solution on which the optional features are currently based, to resolve a corresponding technical problem and achieve a corresponding effect. Alternatively, in some scenarios, the optional features are combined with another feature based on a requirement. Correspondingly, an apparatus provided in embodiments of this application may also correspondingly implement these features or functions. Details are not described herein.

It should be understood that "an embodiment" mentioned in the entire specification means that particular features, structures, or characteristics related to the embodiment are included in at least one embodiment of this application. Therefore, embodiments in the entire specification are not necessarily same embodiments. In addition, these particular features, structures, or characteristics may be combined in one or more embodiments by using any appropriate manner.

It should be understood that the solutions in embodiments of this application may be properly combined for use, and explanations or descriptions of terms in embodiments may be cross-referenced or explained in embodiments. This is not limited.

It should further be understood that sequence numbers of the foregoing processes do not mean execution sequences in various embodiments of this application. The execution sequences of the processes should be determined based on functions and internal logic of the processes. Numbers or sequence numbers in the foregoing processes are merely used for differentiation for ease of description, and should not constitute any limitation on an implementation process of embodiments of this application.

Corresponding to the methods provided in the foregoing method embodiments, an embodiment of this application further provides a corresponding apparatus. The apparatus includes a corresponding module configured to perform the foregoing embodiments. The module may be software, hardware, or a combination of software and hardware. It may be understood that the technical features described in the method embodiments are also applicable to the following apparatus embodiments.

FIG. 8 is a schematic block diagram of a communications apparatus according to an embodiment of this application. As shown in FIG. 8, the communications apparatus 1000 may include a transceiver unit 1100 and a processing unit 1200.

In a possible design, the communications apparatus 1000 may correspond to the terminal device in the foregoing method embodiments, for example, may be a terminal device, or may be a chip disposed in a terminal device.

Specifically, the communications apparatus 1000 may correspond to the terminal device in the method 200 or the method 700 according to embodiments of this application. The communications apparatus 1000 may include units configured to perform the method performed by the terminal device in the method 200 in FIG. 2 or the method 700 in FIG.7. In addition, the units in the communications apparatus 1000 and the foregoing other operations and/or functions are separately used to implement corresponding procedures of the terminal device in the method 200 in FIG. 2 or the method 700 in FIG.7.

In a possible implementation, the transceiver unit 1100 and the processing unit 1200 may be configured to perform the following steps.

The transceiver unit 1100 is configured to receive first indication information from a network device, where the first indication information indicates a terminal device to enter a first state in a first cell, the first state includes a synchronous measurable state, and the first indication information is sent by the network device by using a second cell.

The processing unit 1200 is configured to enter the first state in the first cell based on the first indication information.

Optionally, the first indication information includes a first field and/or a second field. The first field identifies the first cell, and the second field indicates an action performed by the terminal device to enter the first state.

Optionally, the first cell and the second cell are configured by the network device for the terminal device, the second cell is an active cell, and the first cell is a deactivated cell.

Optionally, the transceiver unit 1100 is further configured to receive second indication information from the network device, where the second indication information indicates the terminal device to activate the first cell.

Optionally, the first indication information is received before the second indication information from the network device is received.

Optionally, the first indication information is received after the second indication information from the network device is received, and the first cell is in an out-of-synchronization state after being activated.

Optionally, the transceiver unit 1100 is further configured to send third indication information to the network device, where the third indication information indicates quality or strength of a signal of the first cell.

Optionally, the signal includes a synchronization signal block SSB or a channel state information-reference signal CSI-RS.

Optionally, the transceiver unit 1100 is further configured to send fourth indication information to the network device, where the fourth indication information indicates that a status of the terminal device in the first cell is the first state.

Optionally, the first cell is a secondary cell, and the processing unit 1200 is further configured to perform downlink synchronization detection on the secondary cell, and invoke the transceiver unit 1100 to send fifth indication information to the network device based on a result of the downlink synchronization detection, where the fifth indication information indicates that the secondary cell is in the downlink out-of-synchronization state.

Optionally, the transceiver unit 1100 is further configured to receive configuration information from the network device, where the configuration information is used to perform the downlink synchronization detection on the secondary cell.

Optionally, the configuration information includes one or more of the following: a threshold of out-of-synchronization indication times, an out-of-synchronization determination timer, and a threshold of synchronization indication times.

Alternatively, in another possible implementation, the transceiver unit 1100 and the processing unit 1200 may be configured to perform the following steps.

The transceiver unit 1100 is configured to receive configuration information from a network device, where the configuration information is used by a terminal device to perform downlink synchronization detection on a first cell, and the first cell is a secondary cell configured by the network device for the terminal device.

The processing unit 1200 is configured to perform the downlink synchronization detection based on the configuration information.

The transceiver unit 1100 is further configured to send indication information to the network device, where the indication information indicates that the first cell is in a downlink out-of-synchronization state.

Optionally, the configuration information includes one or more of the following: a threshold of out-of-synchronization indication times, an out-of-synchronization determination timer, and a threshold of synchronization indication times.

Optionally, the transceiver unit 1100 is further configured to receive first indication information from the network device, where the first indication information indicates the terminal device to enter a first state in the first cell, and the first state includes a synchronous measurable state.

It should be understood that a specific process in which each unit performs the foregoing corresponding steps is described in detail in the foregoing method embodiment. For brevity, details are not described herein.

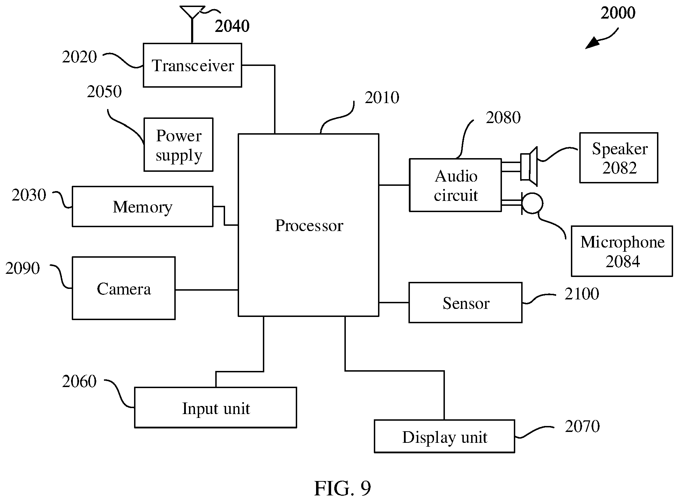

It should be further understood that when the communications apparatus 1000 is the terminal device, the transceiver unit 1100 in the communications apparatus 1000 may correspond to a transceiver 2020 in a terminal device 2000 shown in FIG. 9, and the processing unit 1200 in the communications apparatus 1000 may correspond to a processor 2010 in the terminal device 2000 shown in FIG. 9.

It should be further understood that when the communications apparatus 1000 is a chip disposed in the terminal device, the transceiver unit 1200 in the communications apparatus 1000 may be an input/output interface circuit.

Optionally, the communications apparatus 1000 further includes a storage unit. The storage unit may be configured to store instructions or data. The processing unit may invoke the instructions or the data stored in the storage unit, to implement a corresponding operation. The storage unit may be implemented via at least one memory. For example, the storage unit may correspond to a memory 2030 in the terminal device 2000 in FIG. 9.

In a possible design, the communications apparatus 1000 may correspond to the network device in the foregoing method embodiments, for example, may be a network device, or may be a chip disposed in a network device.

Specifically, the communications apparatus 1000 may correspond to the network device in the method 200 or the method 700 according to embodiments of this application. The communications apparatus 1000 may include units configured to perform the method performed by the network device in the method 200 in FIG. 2 or the method 700 in FIG.7. In addition, the units in the communications apparatus 1000 and the foregoing other operations and/or functions are separately used to implement corresponding procedures of the network device in the method 200 in FIG. 2 or the method 700 in FIG.7.

In a possible implementation, the transceiver unit 1100 and the processing unit 1200 may be configured to perform the following steps.

The processing unit 1200 is configured to determine first indication information, where the first indication information indicates a terminal device to enter a first state in a first cell, and the first state includes a synchronous measurable state.

The transceiver unit 1100 is configured to send the first indication information to the terminal device, where the first indication information is sent by using a second cell.

Optionally, the first indication information includes a first field and/or a second field. The first field identifies the first cell, and the second field indicates an action performed by the terminal device to enter the first state.

Optionally, the first cell and the second cell are configured by the network device for the terminal device, the second cell is an active cell, and the first cell is a deactivated cell.

Optionally, the transceiver unit 1100 is further configured to send second indication information to the terminal device, where the second indication information indicates the terminal device to activate the first cell.

Optionally, the first indication information is sent before the second indication information is sent.

Optionally, the first indication information is sent after the second indication information is sent, and the first cell is in an out-of-synchronization state after being activated.

Optionally, the transceiver unit 1100 is further configured to receive third indication information from the terminal device, where the third indication information indicates signal quality or strength of a first signal of the first cell.

Optionally, the signal includes a synchronization signal block SSB or a channel state information-reference signal CSI-RS.

Optionally, the transceiver unit 1100 is further configured to receive fourth indication information from the terminal device, where the fourth indication information indicates that a status of the terminal device in the first cell is the first state.

Optionally, the first cell is a secondary cell. The transceiver unit 1100 is further configured to receive fifth indication information from the terminal device, where the fifth indication information indicates that the secondary cell is in a downlink out-of-synchronization state.

Optionally, the transceiver unit 1100 is further configured to send configuration information to the terminal device, where the configuration information is used by the terminal device to perform downlink synchronization detection on the secondary cell.

Optionally, the configuration information includes one or more of the following: a threshold of out-of-synchronization indication times, an out-of-synchronization determination timer, and a threshold of synchronization indication times.

Alternatively, in another possible implementation, the transceiver unit 1100 and the processing unit 1200 may be configured to perform the following steps.

The transceiver unit 1100 is configured to: send configuration information to a terminal device, where the configuration information is used by the terminal device to perform downlink synchronization detection on a first cell, and the first cell is a secondary cell configured by a network device for the terminal device; and receive indication information from the terminal device, where the indication information indicates that the secondary cell is in a downlink out-of-synchronization state.

Optionally, the configuration information includes one or more of the following: a threshold of out-of-synchronization indication times, an out-of-synchronization determination timer, and a threshold of synchronization indication times.

Optionally, the processing unit 1200 is configured to determine, based on the indication information and a service requirement, whether to send first indication information to the terminal device, where the first indication information indicates the terminal device to enter a first state in a first cell, and the first state includes a synchronous measurable state.

It should be understood that a specific process in which each unit performs the foregoing corresponding steps is described in detail in the foregoing method embodiments. For brevity, details are not described herein.

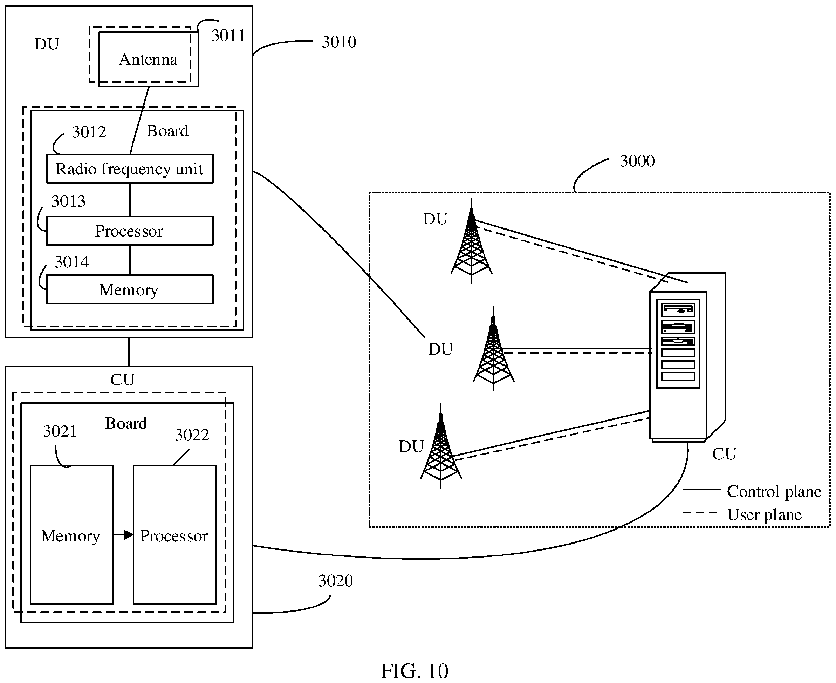

It should be further understood that when the communications apparatus 1000 is a base station, the transceiver unit 1100 in the communications apparatus 1000 may correspond to a radio frequency unit 3012 and an antenna 3011 in a base station 3000 shown in FIG. 10. The processing unit 1100 in the communications apparatus 1000 may be implemented by using at least one processor. For example, The processing unit 1100 may correspond to a processor 3022 in the base station 3000 shown in FIG. 10.

It should be further understood that, when the communications apparatus 1000 is a chip configured in the network device, the transceiver unit 1200 in the communications apparatus 1000 may be an input/output interface.

Optionally, the communications apparatus 1000 further includes a storage unit. The storage unit may be configured to store instructions or data. The processing unit may invoke the instructions or the data stored in the storage unit, to implement a corresponding operation. The storage unit may be implemented by using at least one memory. For example, the storage unit may correspond to a memory 3021 in the base station 3000 in FIG. 10.

FIG. 9 is a schematic diagram of a structure of a terminal device 2000 according to an embodiment of this application. The terminal device 2000 may be applied to the system shown in FIG. 1, and perform a function of the terminal device in the foregoing method embodiments. As shown in FIG. 9, the terminal device 2000 includes a processor 2010 and a transceiver 2020. Optionally, the terminal device 2000 further includes a memory 2030. The processor 2010, the transceiver 2020, and the memory 2030 may communicate with each other through an internal connection path, to transfer a control signal or a data signal. The memory 2030 is configured to store a computer program. The processor 2010 is configured to invoke and run the computer program in the memory 2030, to control the transceiver 2020 to receive and send a signal. Optionally, the terminal device 2000 may further include an antenna 2040, configured to send, by using a radio signal, uplink data or uplink control signaling output by the transceiver 2020.

The processor 2010 and the memory 2030 may be integrated into one processing apparatus. The processor 2010 is configured to execute program code stored in the memory 2030 to implement the foregoing functions. During specific implementation, the memory 2030 may also be integrated into the processor 2010, or may be independent of the processor 2010. The processor 2010 may correspond to the processing unit in FIG. 8.

The transceiver 2020 may correspond to the communications unit in FIG. 8, and may also be referred to as a transceiver unit. The transceiver 2020 may include a receiver (or referred to as a receiving machine or a receiving circuit) and a transmitter (or referred to as a transmitting machine or a transmitting circuit). The receiver is configured to receive a signal, and the transmitter is configured to transmit a signal.

It should be understood that, the terminal device 2000 shown in FIG. 9 may implement processes related to the terminal device in the method embodiment shown in FIG. 2 or FIG. 7. Operations or functions of modules in the terminal device 2000 are intended to implement corresponding processes in the foregoing method embodiments. For details, refer to the descriptions in the foregoing method embodiments. To avoid repetition, detailed descriptions are properly omitted herein.

The processor 2010 may be configured to perform an action that is implemented inside the terminal device and described in the foregoing method embodiment. The transceiver 2020 may be configured to perform an action that is of sending information by the terminal device to the network device or receiving information by the terminal device from the network device and that is described in the foregoing method embodiment. For details, refer to the descriptions in the foregoing method embodiments. Details are not described herein again.

Optionally, the terminal device 2000 may further include a power supply 2050, configured to supply power to various components or circuits in the terminal device.

In addition, to make functions of the terminal device more perfect, the terminal device 2000 may further include one or more of an input unit 2060, a display unit 2070, an audio circuit 2080, a camera 2090, a sensor 2100, and the like, and the audio circuit may further include a speaker 2082, a microphone 2084, and the like.

FIG. 10 is a schematic diagram of a structure of a network device according to an embodiment of this application, for example, may be a schematic diagram of a structure of a base station 3000. The base station 3000 may be applied to the system shown in FIG. 1, and perform a function of the network device in the foregoing method embodiment. As shown in the figure, the base station 3000 may include one or more DUs 3010 and one or more CUs 3020. The CU 3020 may communicate with an NG core (next generation core, NC). The DU 3010 may include at least one antenna 3011, at least one radio frequency unit 3012, at least one processor 3013, and at least one memory 3014. The DU 3010 is mainly configured to receive or send a radio frequency signal, perform conversion between a radio frequency signal and a baseband signal, and perform partial baseband processing. The CU 3020 may include at least one processor 3022 and at least one memory 3021. The CU 3020 and the DU 3010 may communicate with each other through an interface. A control plane (control plane, CP) interface may be Fs-C, for example, F1-C, and a user plane (user plane, UP) interface may be Fs-U, for example, F1-U.

The CU 3020 is mainly configured to perform baseband processing, control the base station, and the like. The DU 3010 and the CU 3020 may be physically disposed together, or may be physically disposed separately. To be specific, the base station is a distributed base station. The CU 3020 is a control center of the base station, or may be referred to as a processing unit. The CU 3020 is mainly configured to implement a baseband processing function. For example, the CU 3020 may be configured to control the base station to perform an operation procedure related to the network device in the foregoing method embodiments.

Specifically, baseband processing of the CU and the DU may be divided based on a protocol layer of a wireless network. For example, functions of a PDCP layer and a layer above the PDCP layer are set on the CU, and functions of protocol layers below the PDCP layer, for example, an RLC layer and a MAC layer, are set on the DU. For another example, the CU implements functions of an RRC layer and a PDCP layer, and the DU implements functions of an RLC layer, a MAC layer, and a PHY layer.

In addition, optionally, the base station 3000 may include one or more radio frequency units (RUs), one or more DUs, and one or more CUs. The DU may include at least one processor 3013 and at least one memory 3014. The RU may include at least one antenna 3011 and at least one radio frequency unit 3012. The CU may include at least one processor 3022 and at least one memory 3021.

In an instance, the CU 3020 may include one or more boards, and a plurality of boards may jointly support a radio access network (for example, a 5G network) of a single access standard, or may separately support radio access networks (for example, an LTE network, a 5G network, or another network) of different access standards. The memory 3021 and the processor 3022 may serve one or more boards. In other words, the memory and the processor may be separately disposed on each board. Alternatively, a plurality of boards may share a same memory and a same processor. In addition, a necessary circuit may further be disposed on each board. The DU 3010 may include one or more boards, and a plurality of boards may jointly support a radio access network (for example, a 5G network) of a single access standard, or may separately support radio access networks (for example, an LTE network, a 5G network, or another network) of different access standards. The memory 3014 and the processor 3013 may serve one or more boards. In other words, the memory and the processor may be separately disposed on each board. Alternatively, a plurality of boards may share a same memory and a same processor. In addition, a necessary circuit may further be disposed on each board.

It should be understood that the base station 3000 shown in FIG. 10 may implement processes related to the network device in the method embodiment in FIG. 2 or FIG. 7. The operations and/or the functions of the modules in the base station 3000 are intended to implement corresponding procedures in the foregoing method embodiments. For details, refer to the descriptions in the foregoing method embodiments. To avoid repetition, detailed descriptions are properly omitted herein.

It should be understood that the base station 3000 shown in FIG. 10 is merely a possible architecture of the network device, and should not constitute any limitation on this application. The method provided in this application is applicable to an access network device having another architecture, for example, an access network device including a CU, a DU, and an AAU. A specific architecture of the network device is not limited in this application.

According to the methods provided in embodiments of this application, this application further provides a computer program product, and the computer program product includes computer program code. When the computer program code is run on a computer, the computer is enabled to perform the method on the terminal device side in the embodiment shown in FIG. 2 or FIG. 7.

According to the methods provided in embodiments of this application, this application further provides a computer-readable medium. The computer-readable medium stores program code. When the program code is run on a computer, the computer is enabled to perform the methods on the network device side in the embodiment shown in FIG. 2 or FIG. 7.

An embodiment of this application further provides a processing apparatus including a processor and an interface. The processor is configured to perform the communications method in any one of the foregoing method embodiments.

The communications apparatus in the foregoing apparatus embodiment completely corresponds to the terminal device and the network device in the method embodiments. A corresponding module or unit performs a corresponding step. For example, a communications unit (transceiver) performs a receiving step or a sending step in the method embodiments, and a processing unit (processor) may perform another step other than the sending step and the receiving step. For a function of a specific unit, refer to a corresponding method embodiment. There may be one or more processors.

A person skilled in the art may further understand that various illustrative logical blocks (illustrative logical blocks) and steps (steps) that are listed in embodiments of this application may be implemented by using electronic hardware, computer software, or a combination thereof. Whether the functions are implemented by using hardware or software depends on particular applications and a design requirement of the entire system. A person skilled in the art may use various methods to implement the described functions for each particular application, but it should not be considered that the implementation goes beyond the scope of embodiments of this application.

It should be understood that the processor in embodiments of this application may be an integrated circuit chip, and has a signal processing capability. In an implementation process, the steps in the foregoing method embodiments may be completed by using a hardware integrated logic circuit in a processor or instructions in a form of software. The processor may be a general-purpose processor, a digital signal processor (digital signal processor, DSP), an application-specific integrated circuit (application -specific integrated circuit, ASIC), a field programmable gate array (field programmable gate array, FPGA) or another programmable logic device, a discrete gate or a transistor logic device, a discrete hardware component, a system on chip (system on chip, SoC), a central processing unit (central processing unit, CPU), a network processor (network processor, NP), a digital signal processor (digital signal processor, DSP), a micro controller unit (micro controller unit, MCU), a programmable logic device (programmable logic device, PLD), or another integrated chip. The methods, the steps, and logical block diagrams that are disclosed in embodiments of this application may be implemented or performed. The general-purpose processor may be a microprocessor, or the processor may be any conventional processor or the like. The steps of the methods disclosed with reference to embodiments of this application may be directly performed and completed by a hardware decoding processor, or may be performed and completed by using a combination of hardware and software modules in the decoding processor. A software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

The technologies described in this application may be implemented in various manners. For example, these technologies may be implemented by using hardware, software, or a combination of hardware and software. For hardware implementation, a processing unit configured to execute these technologies in a communications apparatus (for example, a base station, a terminal, a network entity, or a chip) may be implemented in one or more general-purpose processors, a DSP, a digital signal processor, an ASIC, a programmable logic device, an FPGA, another programmable logic apparatus, a discrete gate or a transistor logic, a discrete hardware component, or any combination thereof. The general-purpose processor may be a microprocessor. Optionally, the general-purpose processor may alternatively be any conventional processor, controller, microcontroller, or state machine. The processor may alternatively be implemented by a combination of computing apparatuses, such as a digital signal processor and a microprocessor, a plurality of microprocessors, one or more microprocessors with a digital signal processor core, or any other similar configuration.

It may be understood that the memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. For example instead of a limitation, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM). It should be noted that the memories in the systems and methods described in this specification include but are not limited to these memories and any memory of another suitable type.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a high-dense digital video disc (digital video disc, DVD)), a semiconductor medium (for example, a solid state drive (solid state disk, SSD)), or the like.

It should be understood that, in this application, "when" and "if' mean that UE or a base station performs corresponding processing in an objective situation, are not intended to limit time, do not require the UE or the base station to perform a determining action during implementation, and do not mean any other limitation.

A person of ordinary skill in the art may understand that first, second, and various reference numerals in this application are merely distinguished for convenient description, and are not used to limit a scope of embodiments of this application, and also indicate a sequence.

In this application, unless otherwise specified, an element represented in a singular form is intended to represent "one or more", but is not intended to represent "only one". In this application, unless otherwise specified, "at least one" is intended to represent "one or more", and "a plurality of" is intended to represent "two or more".

In addition, the terms "system" and "network" may be used interchangeably in this specification. The term "and/or" in this specification describes only an association relationship for describing associated objects and represents that three relationships may exist. For example, A and/or B may represent the following three cases: only A exists, both A and B exist, and only B exists. A may be singular or plural, and B may be singular or plural.

The character "/" generally indicates an "or" relationship between the associated objects.

The term "at least one of' in this specification indicates all or any combination of listed items. For example, "at least one of A, B, and C" may indicate the following six cases: A exists alone, B exists alone, C exists alone, A and B coexist, B and C coexist, and A, B, and C coexist. A may be singular or plural, B may be singular or plural, and C may be singular or plural.

It should be understood that in embodiments of this application, "B corresponding to A" indicates that B is associated with A, and B may be determined based on A. However, it should be further understood that determining B based on A does not mean that B is determined based only on A. B may alternatively be determined based on A and/or other information.

The correspondences shown in the tables in this application may be configured, or may be predefined. Values of the information in the tables are merely examples, and other values may be configured. This is not limited in this application. When a correspondence between information and each parameter is configured, not all correspondences shown in the tables need to be configured. For example, in the tables in this application, correspondences shown in some rows may alternatively not be configured. For another example, proper deformations and adjustments such as splitting and combination may be performed based on the foregoing tables. Names of the parameters shown in titles of the foregoing tables may also be other names that can be understood by a communications apparatus, and values or representation manners of the parameters may also be other values or representation manners that can be understood by the communications apparatus. During implementation of the foregoing tables, another data structure, such as an array, a queue, a container, a stack, a linear table, a pointer, a linked list, a tree, a graph, a structure, a class, a pile, or a hash table, may be used.

For unified description herein, "predefined" in embodiments of this application may be understood as define, pre-define, store, pre-store, pre-negotiate, pre-configure, solidify, or pre-burn. The configuration in embodiments of this application may be understood as being notified by using RRC signaling, MAC signaling, or physical layer information, where the physical layer information may be transmitted through a PDCCH or a PDSCH.

A person of ordinary skill in the art may be aware that, units and algorithm steps in the examples described with reference to embodiments disclosed in this specification can be implemented by electronic hardware or a combination of computer software and electronic hardware. Whether the functions are performed by the hardware or the software depends on particular applications and design constraints of the technical solutions. A person skilled in the art may use different methods to implement the described functions for each particular application, but it should not be considered that the implementation goes beyond the scope of this application

A person skilled in the art may clearly understand that, for ease and brevity of description, for detailed working processes of the described system, apparatus, and unit, refer to corresponding processes in the foregoing method embodiments. Details are not described herein again.

In several embodiments provided in this application, it should be understood that the disclosed system, apparatus, and method may be implemented in other manners. For example, the described apparatus embodiment is merely an example. For example, the unit division is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, that is, may be located in one position, or may be distributed on a plurality of network units. Some or all of the units may be selected based on actual requirements to achieve the objectives of the solutions of embodiments.

In addition, functional units in the embodiments of this application may be integrated into one processing unit, or each of the units may exist alone physically, or two or more units may be integrated into one unit.

When the functions are implemented in a form of a software function unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods according to embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communications method, comprising:
receiving first indication information from a network device, wherein the first indication information indicates a terminal device to enter a first state in a first cell, the first state comprises a synchronous measurable state, and the first indication information is sent by the network device by using a second cell; and
entering the first state in the first cell based on the first indication information.

2. The communications method according to claim 1, wherein the first indication information comprises a first field and/or a second field; and the first field identifies the first cell, and the second field indicates an action performed by the terminal device to enter the first state.

3. The communications method according to claim 1 or 2, wherein the first cell and the second cell are configured by the network device for the terminal device, the second cell is an active cell, and the first cell is a deactivated cell.

4. The communications method according to any one of claims 1 to 3, wherein the communications method further comprises:
receiving second indication information from the network device, wherein the second indication information indicates the terminal device to activate the first cell.

5. The communications method according to claim 4, wherein the first indication information is received before the second indication information from the network device is received.

6. The communications method according to claim 4, wherein the first indication information is received after the second indication information from the network device is received, and the first cell is in an out-of-synchronization state after being activated.

7. The communications method according to any one of claims 1 to 6, wherein the communications method further comprises:
sending third indication information to the network device, wherein the third indication information indicates quality or strength of a signal of the first cell.

8. The communications method according to claim 7, wherein the signal comprises a synchronization signal block SSB or a channel state information-reference signal CSI-RS.

9. The communications method according to any one of claims 1 to 8, wherein the communications method further comprises:
sending fourth indication information to the network device, wherein the fourth indication information indicates that a status of the terminal device in the first cell is the first state.

10. The communications method according to claim 1, wherein the first cell is a secondary cell, and the communications method further comprises:
performing downlink synchronization detection on the secondary cell; and
sending fifth indication information to the network device based on a result of the downlink synchronization detection, wherein the fifth indication information indicates that the secondary cell is in a downlink out-of-synchronization state.

11. The communications method according to claim 10, wherein the communications method further comprises:
receiving configuration information from the network device, wherein the configuration information is used to perform the downlink synchronization detection on the secondary cell.

12. The communications method according to claim 11, wherein the configuration information comprises one or more of the following: a threshold of out-of-synchronization indication times, an out-of-synchronization determination timer, and a threshold of synchronization indication times.

13. A communications method, comprising:
determining first indication information, wherein the first indication information indicates a terminal device to enter a first state in a first cell, and the first state comprises a synchronous measurable state; and
sending the first indication information to the terminal device, wherein the first indication information is sent by using a second cell.

14. The communications method according to claim 13, wherein the first indication information comprises a first field and/or a second field; and the first field identifies the first cell, and the second field indicates an action performed by the terminal device to enter the first state.

15. The communications method according to claim 13 or 14, wherein the first cell and the second cell are configured by the network device for the terminal device, the second cell is an active cell, and the first cell is a deactivated cell.

16. The communications method according to any one of claims 13 to 15, wherein the communications method further comprises:
sending second indication information to the terminal device, wherein the second indication information indicates the terminal device to activate the first cell.

17. The communications method according to claim 16, wherein the first indication information is sent before the second indication information is sent.

18. The communications method according to claim 16, wherein the first indication information is sent after the second indication information is sent, and the first cell is in an out-of-synchronization state after being activated.

19. The communications method according to any one of claims 13 to 18, wherein the communications method further comprises:
receiving third indication information from the terminal device, wherein the third indication information indicates signal quality or strength of a first signal of the first cell.

20. The communications method according to claim 19, wherein the signal comprises a synchronization signal block SSB or a channel state information-reference signal CSI-RS.

21. The communications method according to any one of claims 13 to 20, wherein the communications method further comprises:
receiving fourth indication information from the terminal device, wherein the fourth indication information indicates that a status of the terminal device in the first cell is the first state.

22. The communications method according to claim 13, wherein the first cell is a secondary cell, and the communications method further comprises:
receiving fifth indication information from the terminal device, wherein the fifth indication information indicates that the secondary cell is in a downlink out-of-synchronization state.

23. The communications method according to claim 22, wherein the communications method further comprises:
sending configuration information to the terminal device, wherein the configuration information is used by the terminal device to perform downlink synchronization detection on the secondary cell.

24. The communications method according to claim 23, wherein the configuration information comprises one or more of the following: a threshold of out-of-synchronization indication times, an out-of-synchronization determination timer, and a threshold of synchronization indication times.

25. An apparatus, wherein the apparatus comprises a unit or module configured to perform the communications method according to any one of claims 1 to 12, or a unit or module configured to perform the communications method according to any one of claims 13 to 24.

26. An apparatus, comprising a processor, wherein the processor is coupled to a memory, the memory is configured to store a program or instructions, and when the program or the instructions are executed by the processor, the apparatus is enabled to perform the communications method according to any one of claims 1 to 12, or the apparatus is enabled to perform the communications method according to any one of claims 13 to 24.

27. A computer-readable storage medium, wherein the computer-readable storage medium stores a computer program or instructions, wherein when the computer program or instructions are executed, a computer is enabled to perform the communications method according to any one of claims 1 to 12, or the computer is enabled to perform the communications method according to any one of claims 13 to 24.
